# FASCICULE DE BREVET EUROPEEN

(11) **EP 0 543 267 B1**
(45) Date de publication et mention de la délivrance du brevet: **09.08.1995**
(21) Numéro de dépôt: 92119277.9
(22) Date de dépôt: 11.11.1992
(51) Int. Cl.: B60C 11/12, B60C 11/11

(54) **Bande de roulement pourvue de rainures dont les parois sont munies d'incisions**
Lauffläche mit Nuten, deren Seitenwände mit Feineinschnitten versehen sind
Tread with grooves whose sidewalls comprise incisions

(30) Priorité: 18.11.1991 FR 9114278
(43) Date de publication de la demande: 26.05.1993
(73) Titulaire: COMPAGNIE GENERALE DES ETABLISSEMENTS MICHELIN - MICHELIN & CIE, 63040 Clermont-Ferrand Cédex (FR)
(72) Inventeur: Lagnier, Alain, F-63540 Romagnat (FR)
(74) Mandataire: Devaux, Edmond-Yves

(56) Documents cités:
- EP-A- 0 378 090
- EP-A- 0 450 251
- FR-A- 2 119 263
- GB-A- 1 274 554
- GB-A- 2 053 783

## Description

L'invention concerne la bande de roulement d'un pneumatique routier, doté d'une armature de carcasse radiale et d'une armature de sommet et plus particulièrement destiné à des roulages sur sols enneigés, verglacés ou mouillés.

Une telle bande de roulement est généralement formée d'éléments en reliefs, nervures ou blocs, séparés les uns des autres dans le sens circonférentiel et/ou dans le sens transversal par des rainures et pourvus de nombreuses incisions ou fentes, dont la largeur non nulle est très inférieure à la largeur des rainures circonférentielles et transversales qui délimitent les éléments en relief.

La largeur d'une incision est généralement variable en fonction de la dimension du pneumatique étudié, mais comprise entre 0,2 mm et 2 mm.

Une telle bande de roulement est connue par example de EP-A-0 378 090.

En fonction des principaux efforts exercés par le sol sur les éléments en relief de la bande de roulement, cette dernière comporte généralement des blocs munis d'incisions dont les tracés sur la surface de la bande de roulement sont parallèles entre eux et dont les axes moyens sont parallèles à l'axe médian des rainures transversales délimitant le bloc, lesdites incisions étant efficaces soit sous couple moteur imposé à la roue, soit sous couple freineur. La bande de roulement peut aussi comporter des blocs munis d'incisions parallèles entre elles et parallèles aux rainures circonférentielles.

Les tracés sur la surface de la bande de roulement peuvent être rectilignes, ondulés ou en zigzag, les axes moyens de ces tracés étant les droites indiquant la direction moyenne desdits tracés.

Il faut entendre par rainures transversales des rainures ou des portions de rainures présentant sur la surface de la bande de roulement un axe médian faisant avec la direction axiale ou parallèle à l'axe de rotation un angle compris entre - 20° et + 20°. Il faut entendre par rainures circonférentielles des rainures ou portions de rainures faisant avec la direction circonférentielle du pneumatique un angle compris entre - 20° et + 20°. De manière identique les tracés des incisions seront parallèles entre eux si l'angle formé par lesdits tracés est compris entre - 20° et + 20°.

Soit afin d'améliorer l'usure globale de la bande de roulement, soit afin d'améliorer l'adhérence sur les sols considérés, de nombreuses formes d'incisions ont été proposées. En particulier le brevet français n° 2 461 501, afin de remédier à la déchéance sensible de l'adhérence qui apparaît à partir d'un taux d'usure de la bande de roulement compris entre 30 et 55 %, tout en diminuant la vitesse d'usure en début de vie du pneumatique, propose des incisions présentant en section droite des tracés en forme de fourches à au moins deux branches, branches pouvant présenter soit la forme générale d'un U soit d'un V.

Le compromis entre les propriétés d'adhérence et les propriétés d'usure, obtenu avec ce type d'incisions, est d'un très bon niveau. Il peut cependant être amélioré en particulier par un gain notable en adhérence sur les sols considérés, tout en permettant un comportement routier très acceptable.

A cet effet, la bande de roulement, pour pneumatique à armature de carcasse radiale surmontée d'une armature de sommet, comportant au moins des éléments en relief ou blocs séparés par des rainures circonférentielles et transversales pourvues d'incisions de largeur (e) non nulle comprise entre 0,2 et 2 mm, présentant sur la surface de la bande de roulement des tracés parallèles entre eux et dont les axes moyens forment soit avec la direction axiale soit avec la direction circonférentielle des angles au plus égaux en valeur absolue à 40°, et en section droite des tracés de largeur (e) qui, à partir d'une certaine profondeur (h1) se subdivisent en deux branches, est caractérisée en ce que les rainures, parallèles à l'orientation moyenne des incisions d'un bloc, ont, vues en section droite, des parois munies d'une incision prenant naissance à une hauteur (h1) et dont le tracé sur la profondeur restante (h - h1) forme avec le tracé de la rainure jusqu'à la profondeur (h) un tracé symétrique par rapport à une droite perpendiculaire à la surface de la bande de roulement du tracé de l'incision la plus proche de la rainure, h étant la profondeur de ladite incision.

La présence de cette incision permet à la lamelle de gomme la plus proche de la rainure de conserver une surface de contact avec le sol maximale sous l'effet des efforts longitudinaux ou transversaux subis par la bande de roulement du pneumatique considéré.

Il est particulièrement avantageux, en vue de permettre aux arêtes crées par les incisions de s'auto-user, sans cependant entraîner une usure trop rapide des lamelles entre incisions, que les tracés des branches des incisions soient sous forme de V, les deux branches prolongeant une première partie de l'incision préférentiellement inclinée par rapport à la direction perpendiculaire à la surface de la bande de roulement d'un angle compris entre - 20 °et + 20°, les branches en V formant un angle au plus égal à 40°.

Les caractéristiques et avantages de la présente invention seront mieux compris à l'aide de la description qui suit et qui se réfère au dessin illustrant à titre non limitatif des exemple d'exécution :
- la figure 1 est une vue, selon un plan de coupe perpendiculaire à la surface de la bande de roulement et à l'orientation moyenne de la rainure transversale et des incisions transversales, des blocs adjacents à la rainure ;
- les figures 2A à 2D représentent des variantes d'exécution.

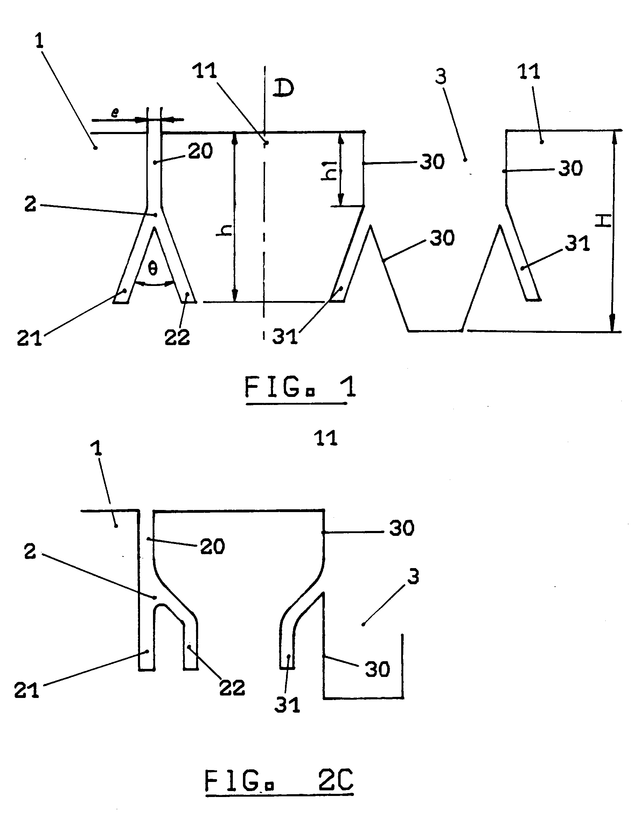

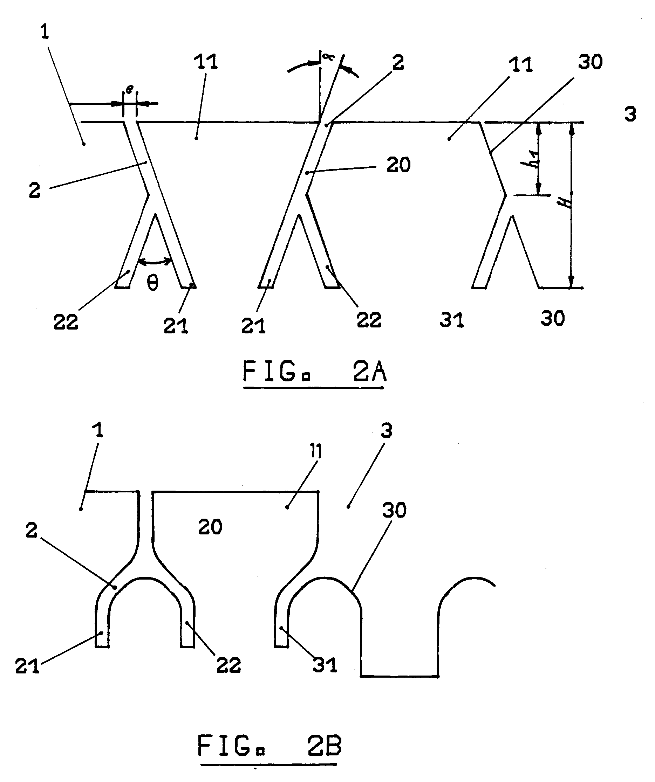

Une portion de bande de roulement (1) d'un pneumatique comporte des éléments en relief ou blocs (11) séparés entre eux par des rainures circonférentielles (3) (non montrées) et des rainures transversales (3) de largeurs comprises entre 3 et 7 mm. Sur le figure 1 est représentée, en section droite par un plan perpendiculaire à l'orientation de la rainure (3) et des incisions (2), une rainure (3) séparant deux blocs (11) munis d'incisions (2) dont les tracés sur la surface de la bande de roulement sont parallèles entre eux et à l'orientation moyenne de la rainure (3). La rainure transversale (3) a une profondeur H égale à 9 mm. Les incisions (2), de largeur 0,8 mm, sont des incisions comprenant, à partir de la surface de la bande de roulement (1) une partie rectiligne (20) perpendiculaire à ladite surface et prolongée radialement à l'intérieur par deux branches (21) et (22) de largeur égale à 0,4 mm. La partie rectiligne (20) s'étend sur une profondeur h1 égale à 3,6 mm, soit 0,45 h, h étant la profondeur totale de l'incision (2) égale à 8 mm. Les deux branches (21) et (22) font entre elles un angle (ϑ) égal à 30°.

Sur la paroi (30) de la rainure (3) prend naissance à la profondeur (h1) une incision (31) dont le tracé, sur la profondeur (h - h1), est incliné. Ledit tracé forme avec le tracé (30) de la paroi de la rainure (3) existant jusqu'à la profondeur (h) un tracé symétrique, par rapport à une droite (D) perpendiculaire à la surface de la bande de roulement, du tracé de l'incision (2) la plus proche circonférentiellement de la rainure (3).

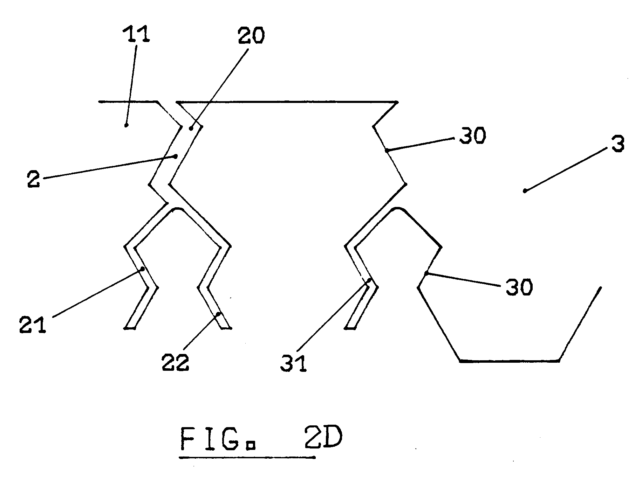

Sur la figure 2A est représenté un bloc (11) de bande de roulement (1) qui diffère du bloc (11) de la figure 1 par le fait que les incisions (2) ont, à partir de la surface de la bande de roulement (1) des tracés (20) rectilignes et inclinés par rapport à une perpendiculaire à la surface de la bande de roulement selon un angle (α) égal à ± 10° de sorte que deux incisions adjacentes aient des inclinaisons d'orientations opposées, l'inclinaison de la paroi (30) de la rainure (3) étant, sur la profondeur (hl) d'orientation opposée à celle de la partie rectiligne (20) de l'incision (2) la plus proche circonférentiellement de la rainure (3).

Sur les figures 2B et 2C, les blocs (11) sont munis d'incisions (2) dont les branches (21) et (22) ont des tracés, vus en section droite présentant la forme d'un U (figure 2B) ou la forme de la partie basse d'un h (figure 2C).

Quant à la figure 2D, elle représente un bloc (11) muni d'incisions (2) combinant les caractéristiques suivantes : les incisions ont des parties (20), reliant la surface de la bande de roulement aux branches (21) et (22), ainsi que les branches (21) et (22) elles-mêmes possédant des tracés en zigzag en profondeur. Conformément à l'invention, l'incision (31) prenant naissance sur la paroi (30) a elle aussi un tracé en zigzag et la paroi (30) a un tracé adapté. Cette combinaison de caractéristiques permet à la bande de roulement (1) ainsi munie de présenter une régularité d'usure remarquable tout en présentant à chaque instant de sa vie sensiblement le même nombre d'arêtes efficaces dans le cas de la motricité que d'arêtes efficaces dans le cas de freinage.

## Revendications

1. Bande de roulement (1) pour pneumatique à armature de carcasse radiale surmontée d'une armature de sommet, comportant au moins des éléments en relief ou blocs (11) séparés par des rainures circonférentielles et transversales (3), pourvues d'incisions (2) de largeur (e) non nulle comprise entre 0,2 et 2 mm présentant sur la surface de la bande de roulement (1) des tracés parallèles entre eux et formant soit avec la direction axiale soit avec la direction circonférentielle des angles au plus égaux en valeur absolue à 40°, et en section droite des tracés de largeur (e) qui, à partir d'une certaine profondeur (h1) se subdivisent en deux branches (21) et (22) de largeur (e/2), caractérisée en ce que les rainures (3) ont, vues en section droite, des parois (30) munies d'une incision (31) prenant naissance à la hauteur (h1) et dont le tracé sur la profondeur restante (h - h1) forme avec le tracé de la paroi (30) de la rainure (3) jusqu'à la profondeur (h) un tracé symétrique, par rapport à une droite (D) perpendiculaire à la surface de la bande de roulement, du tracé de l'incision (2) la plus proche de la rainure (3), (h) étant la profondeur de ladite incision.

2. Bande de roulement selon la revendication 1, caractérisé en ce que l'incision (2) la plus proche de la rainure (3) comprend une première partie (20) perpendiculaire à la surface de la bande de roulement (1) prolongée radialement à l'intérieur par deux branches (21) et (22) rectilignes disposées symétriquement de part et d'autre du prolongement de la première partie (20) en faisant avec ledit prolongement un angle au plus égal à 20°.

3. Bande de roulement selon la revendication 1, caractérisée en ce que l'incision (2) la plus proche de la rainure (3) comprend une première partie (20) rectiligne, inclinée d'un angle (α) compris entre - 20° et + 20° par rapport à une perpendiculaire à la surface de la bande de roulement (1) et deux branches (21) et (22) rectilignes, la branche (21) étant dans le prolongement de la partie (20) et la branche (22) faisant avec la branche (21) un angle (ϑ) au plus égal à 40°.

4. Bande de roulement selon la revendication 1, caractérisée en ce que les blocs (11) comprennent des incisions (2) avec des premières parties (20) inclinées d'un angle (α) compris entre - 20° et + 20° et des branches (21) (22) rectilignes faisant entre elles un angle (ϑ) au plus égal à 40°, les premières parties (20) des incisions (2) adjacentes ayant des orientations opposées respectivement - α et + α.

5. Bande de roulement selon la revendication 1, caractérisée en ce que les blocs (11) comprennent des incisions (2) avec des premières parties (20) dont les tracés sont en zigzag ou ondulés et des branches (21) (22) dont les tracés sont aussi en zigzag ou ondulés et symétriques par rapport au prolongement de l'axe moyen du tracé de la première partie (20).

## Claims

1. A tread (1) for a tyre with radial carcass reinforcement surmounted by a tread reinforcement, comprising at least elements in relief or blocks (11) separated by circumferential and transverse grooves (3), provided with incisions (2) of width (e) other than zero of between 0.2 and 2 mm and having on the surface of the tread (1) traces parallel to each other and forming with the axial direction or with the circumferential direction angles at most equal in absolute value to 40°, and in cross-section traces of width (e) which, starting from a certain depth (h1), are subdivided into two branches (21) and (22) of width (e/2), characterised in that the grooves (3), seen in cross-section, have walls (30) provided with an incision (31) commencing at the height (h1) and the trace of which over the remaining depth (h - h1) forms with the trace of the wall (30) of the groove (3) down to the depth (h) a trace symmetrical, with respect to a straight line (D) perpendicular to the surface of the tread, to the trace of the incision (2) closest to the groove (3), h being the depth of said incision.

2. A tread according to Claim 1, characterised in that the incision (2) closest to the groove (3) comprises a first portion (20) perpendicular to the surface of the tread (1) extended radially to the inside by two rectilinear branches (21) and (22) arranged symmetrically on both sides of the extension of the first portion (20), forming an angle of at most 20° with said extension.

3. A tread according to Claim 1, characterised in that the incision (2) closest to the groove (3) comprises a first rectilinear portion (20), inclined by an angle (α) of between -20° and +20° with respect to a line perpendicular to the surface of the tread (1), and two rectilinear branches (21) and (22), the branch (21) being in the extension of the portion (20) and the branch (22) forming an angle (ϑ) of at most 40° with the branch (21).

4. A tread according to Claim 1, characterised in that the blocks (11) comprise incisions (2) with first portions (20) inclined by an angle (α) of between -20° and +20° and rectilinear branches (21) and (22) forming with each other an angle (ϑ) of at cost 40°, the first portions (20) of the adjacent incisions (2) having opposite orientations of -α and +α, respectively.

5. A tread according to Claim 1, characterised in that the blocks (11) comprise incisions (2) with first portions (20) the traces of which are of zigzag or undulated shape and branches (21) and (22) the traces of which are also of zigzag or undulated shape and symmetrical with respect to the extension of the centre axis of the trace of the first portion (20).

## Patentansprüche

1. Laufstreifen (1) für einen Luftreifen mit radialer Karkassenbewehrung und darüberliegender Scheitelbewehrung, der wenigstens vorspringende Elemente oder Blöcke (11) aufweist, die durch in Umfangsrichtung bzw. in Querrichtung verlaufende Rillen (3) getrennt sind, die mit Einschnitten (2) mit einer von Null verschiedenen Breite (e) von zwischen 0,2 und 2 mm versehen sind, die auf der Oberfläche des Laufstreifens (11) zueinander parallele Verläufe aufweisen und mit der Achsenrichtung oder der Umfangsrichtung Winkel mit einem Betrag von höchstens 40° bilden, und die im Querschnitt Verläufe der Breite (e) haben, die sich ab einer bestimmten Tiefe (h1) in zwei Zweige (21) und (22) der Breite (e/2) gabeln,
dadurch gekennzeichnet, daß
die Rillen (3) im Querschnitt gesehen Wände (30) mit einem Einschnitt (31) haben, der in der Höhe (h1) beginnt und dessen Verlauf über die restliche Tiefe (h - h1) zusammen mit dem Verlauf der Wand (30) der Rille (3) bis zur Tiefe (h) einen zum Verlauf des der Rille (3) nächstliegenden Einschnitts (2) bezüglich einer zur Oberfläche des Laufstreifens senkrechten Geraden (D) symmetrischen Verlauf bildet, wobei (h) die Tiefe des Einschnitts ist.

2. Laufstreifen nach Anspruch 1, dadurch gekennzeichnet, daß der der Rille (3) nächstliegende Einschnitt (2) einen ersten zur Oberfläche des Laufstreifens (1) senkrechten Abschnitt (20) umfaßt, der radial nach innen durch zwei geradlinige, symmetrisch beiderseits der Verlängerung des ersten Abschnitts (20) angeordnete Zweige (21) und (22) verlängert ist, die mit der Verlängerung einen Winkel von höchstens 20° bilden.

3. Laufstreifen nach Anspruch 1, dadurch gekennzeichnet, daß der der Rille (3) nächstliegende Einschnitt (2) einen ersten geradlinigen Abschnitt (20), der unter einem Winkel (α) von -20° bis +20° gegen eine Senkrechte zur Oberfläche des Laufstreifens (1) geneigt ist, und zwei geradlinige Zweige (21) und (22) umfaßt, wobei der Zweig (21) in der Verlängerung des Abschnitts (20) liegt und der Zweig (22) mit dem Zweig (21) einen Winkel (ϑ) von höchstens 40° bildet.

4. Laufstreifen nach Anspruch 1, dadurch gekennzeichnet, daß die Blöcke (11) Einschnitte (2) mit unter einem Winkel (α) von -20° bis +20° geneigten ersten Abschnitten (20) und untereinander einen Winkel (ϑ) von höchstens 40° bildenden, geradlinigen Zweigen (21) (22) umfassen, wobei die ersten Abschnitte (20) von benachbarten Einschnitten (2) jeweils entgegengesetzte Orientierungen -α und +α haben.

5. Laufstreifen nach Anspruch 1, dadurch gekennzeichnet, daß die Blöcke (11) Einschnitte (2) mit ersten Abschnitten (20) mit gewelltem oder zickzackförmigen Verlauf und Zweige (21) (22) umfassen, deren Verläufe ebenfalls zickzackförmig oder gewellt und symmetrisch zur Verlängerung der Mittelachse des Verlaufs des ersten Abschnitts (20) sind.
